# EUROPÄISCHE PATENTSCHRIFT

(11) **EP 4 328 117 B1**
(45) Veröffentlichungstag und Bekanntmachung des Hinweises auf die Patenterteilung: **17.12.2025**
(21) Anmeldenummer: 23192298.0
(22) Anmeldetag: 19.08.2023
(51) Int. Cl.: B62D 25/08, B62D 25/06, B62D 25/04, B62D 33/04, B60P 3/34, B60J 1/00, B60J 5/10

(54) **FREIZEITFAHRZEUG UND HECKRAHMEN**
RECREATIONAL VEHICLE AND REAR FRAME
VÉHICULE DE LOISIRS ET CADRE ARRIÈRE

(30) Priorität: 19.08.2022 DE 102022121090
(43) Veröffentlichungstag der Anmeldung: 28.02.2024
(73) Patentinhaber: Hymer GmbH & Co. KG, 88339 Bad Waldsee (DE)
(72) Erfinder: MATHIAS, Christian, 88427 Bad Schussenried (DE)
(74) Vertreter: Müller Schupfner & Partner Patent- und Rechtsanwaltspartnerschaft mbB (Muc)

(56) Entgegenhaltungen:
- EP-A1- 0 267 152
- WO-A1-2011/043972
- DE-A1- 102009 021 964
- US-B1- 6 533 348

## Beschreibung

Die Erfindung betrifft ein Freizeitfahrzeug, insbesondere ein Wohnmobil, mit einer Hecköffnung.

Aus der DE 20 2007 018 286 U1 ist ein Fahrzeug mit einem Laderaum bekannt, der durch eine Heckklappe zugänglich ist. Die Heckklappe ist in zwei Segmente unterteilt. Ferner ist die Heckklappe an ihrem oberen Rand über wenigstens ein Scharnier mit dem Fahrzeugkörper verbunden. Die Segmente sind beim Öffnen der Heckklappe in gleicher Schwenkrichtung zu öffnen. Der Laderaum kann als Heckgarage genutzt werden.

Die aus der DE 20 2007 018 286 U1 bekannte Ausgestaltung des Fahrzeugs hat den Nachteil, dass durch die für die Heckklappe erforderliche Aussparung am Heck eine Stabilität der Fahrzeugkarosserie reduziert wird. Dies begrenzt die Abmessungen, die für die Heckklappe zur Verfügung stehen.

EP 0 267 152 A1 beschreibt einen Bauprofilsatz für das Kastengerippe eines Nutzfahrzeuges, beispielsweise eines zur Aufnahme von Hecktüren bestimmten Heckrahmens.

WO 2011/043972 A1 beschreibt eine Hubtor-Kopfbaugruppe an einem Anhängeraufbau eines Fahrzeugs.

US 6 533 348 B1 beschreibt einen Fahrzeugrahmen für den Bau eines Kraftfahrzeugs mit in Grundform U-förmigen Teilen.

Aufgabe der Erfindung ist es, einen Heckrahmen für ein Freizeitfahrzeug und ein Freizeitfahrzeug anzugeben, die eine verbesserte Ausgestaltung und Funktionsweise aufweisen.

Die Aufgabe wird durch einen Heckrahmen mit den Merkmalen des unabhängigen Patentanspruchs 1 und durch ein Freizeitfahrzeug mit den Merkmalen des Patentanspruchs 10 gelöst. Vorteilhafte Weiterbildungen der Erfindung sind in den Unteransprüchen angegeben.

Die Aufgabe wird durch einen Heckrahmen für ein Freizeitfahrzeug, insbesondere ein Wohnmobil, mit einem Außenteil und einem Innenteil gelöst, wobei das Außenteil auf einer U-förmigen Grundform basiert, wobei das Innenteil auf einer U-förmigen Grundform basiert und wobei das Außenteil und das Innenteil so miteinander verbunden sind, dass entlang der U-förmigen Grundformen zumindest abschnittsweise ein von dem Außenteil und dem Innenteil begrenzter Hohlraum gebildet ist.

Ferner wird die Aufgabe durch ein Freizeitfahrzeug, insbesondere ein Wohnmobil, mit solch einem Heckrahmen gelöst.

Vorteilhaft ist es, dass zumindest ein Bodenprofil vorgesehen ist, dass das Außenteil auf einer im montierten Zustand am Boden des Freizeitfahrzeugs offenen U-förmigen Grundform basiert, dass das Innenteil auf einer im montierten Zustand auf einer am Boden des Freizeitfahrzeugs offenen U-förmigen Grundform basiert und dass das Außenteil und/oder das Innenteil am Boden so mit dem Bodenprofil verbunden sind, dass eine O-förmig geschlossene Versteifungsanordnung gebildet ist. Dadurch kann eine große Öffnung am Heck des Freizeitfahrzeugs realisiert werden. Diese Öffnung kann insbesondere bis zum Boden, insbesondere Laufboden, des Freizeitfahrzeugs reichen.

Vorteilhaft ist es, dass das Bodenprofil zumindest im Wesentlichen als Hohlprofil ausgestaltet ist. Dadurch ergibt sich eine hohe Stabilität bei geringem Gewicht.

Vorteilhaft ist es auch, dass Versteifungselemente, insbesondere Versteifungswinkel, vorgesehen sind, die an den Enden des Bodenprofils mit dem Außenteil und/oder dem Innenteil verbunden sind. Dadurch kann eine zusätzliche Versteifung des Hecks erzielt werden. Insbesondere können hierdurch Scherbewegungen der O-förmig geschlossenen Versteifungsanordnung vermieden werden.

Vorteilhaft ist es, dass das Außenteil zumindest teilweise, insbesondere zumindest im Wesentlichen, aus einem faserverstärkten Kunststoff, insbesondere einem glasfaserverstärkten Kunststoff, ausgebildet ist und/oder dass das Innenteil zumindest teilweise, insbesondere zumindest im Wesentlichen, aus einem faserverstärkten Kunststoff, insbesondere einem glasfaserverstärkten Kunststoff, ausgebildet ist. Hierdurch kann eine hohe Festigkeit bei geringem Gewicht erzielt werden.

Vorteilhaft ist es, dass das Außenteil und das Innenteil miteinander zumindest durch Kleben verbunden sind. Hierbei ist es auch vorteilhaft, dass das Außenteil und das Innenteil so ausgestaltet sind, dass entlang der U-förmigen Grundform zumindest abschnittsweise Verbindungsflächen ausgestaltet sind, an denen das Außenteil und das Innenteil durch Kleben miteinander verbunden sind. Hierdurch kann die Festigkeit weiter verbessert werden.

Vorteilhaft ist es, dass das Außenteil und/oder das Innenteil zumindest ein Blechteil, insbesondere ein Bodenblechteil, aufweisen, das vorzugsweise überlaminiert ist. Solch ein Blechteil kann insbesondere eine zuverlässige Befestigung an weiteren Teilen des Fahrzeugs ermöglichen. Speziell ist es vorteilhaft, dass das Außenteil und/oder das Innenteil an dem Blechteil im montierten Zustand mit einem Boden des Freizeitfahrzeugs verbunden ist. Dadurch wird eine vorteilhafte Kraftübertragung zwischen dem Außenteil und/oder dem Innenteil und dem Boden des Freizeitfahrzeugs ermöglicht.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug in einer schematischen, räumlichen Darstellung entsprechend einem Ausführungsbeispiel, wobei eine Ansicht von schräg hinten auf das Heck des Freizeitfahrzeug gezeigt ist;
- Fig. 2: einen Heckrahmen für das in Fig. 1 gezeigte Freizeitfahrzeug entsprechend dem Ausführungsbeispiel, wobei eine schematische, räumliche Darstellung von hinten auf den Heckrahmen gezeigt ist;
- Fig. 3: den in Fig. 2 gezeigten Heckrahmen, wobei eine Ansicht gezeigt ist, die im montierten Zustand der Ansicht aus einem Innenraum des Freizeitfahrzeugs nach hinten entspricht;
- Fig. 4: einen Schnitt durch den in Fig. 3 gezeigten Heckrahmen entlang der mit IV bezeichneten Schnittlinie;
- Fig. 5: einen Schnitt durch den in Fig. 3 gezeigten Heckrahmen entlang der mit V bezeichneten Schnittlinie;
- Fig. 6: einen Schnitt durch den in Fig. 3 gezeigten Heckrahmen entlang der mit VI bezeichneten Schnittlinie;
- Fig. 7: ein Außenteil des in Fig. 2 gezeigten Heckrahmens, wobei eine Ansicht von schräg hinten dargestellt ist, so dass die mit I bezeichnete Richtung der in Fig. 1 gezeigten Richtung entspricht; und
- Fig. 8: eine der in Fig. 7 gezeigten Ansicht entsprechend der Ansicht des Innenteils, wobei die mit I bezeichnete Richtung der in Fig. 1 gezeigten Richtung entspricht.

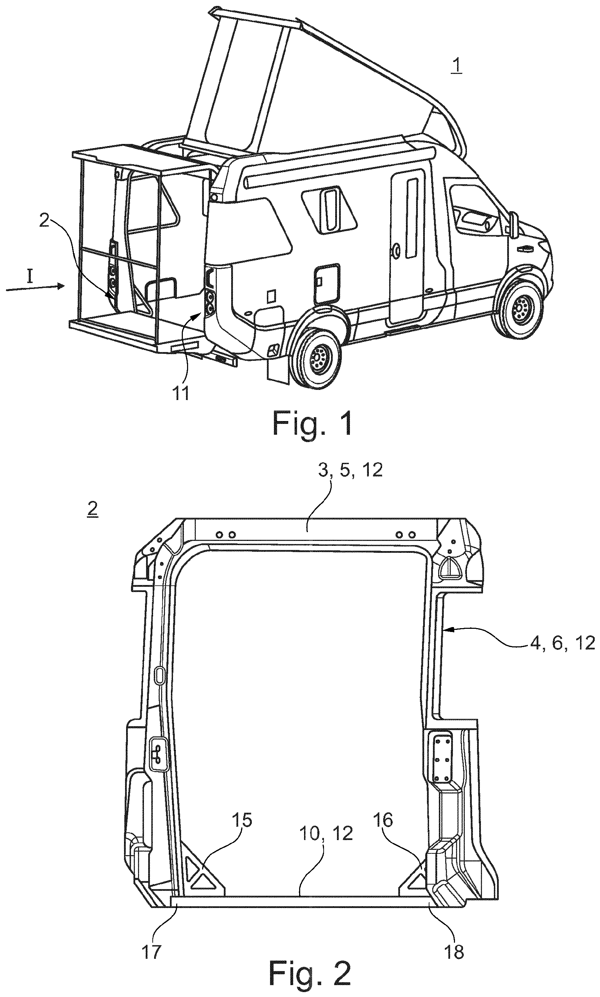

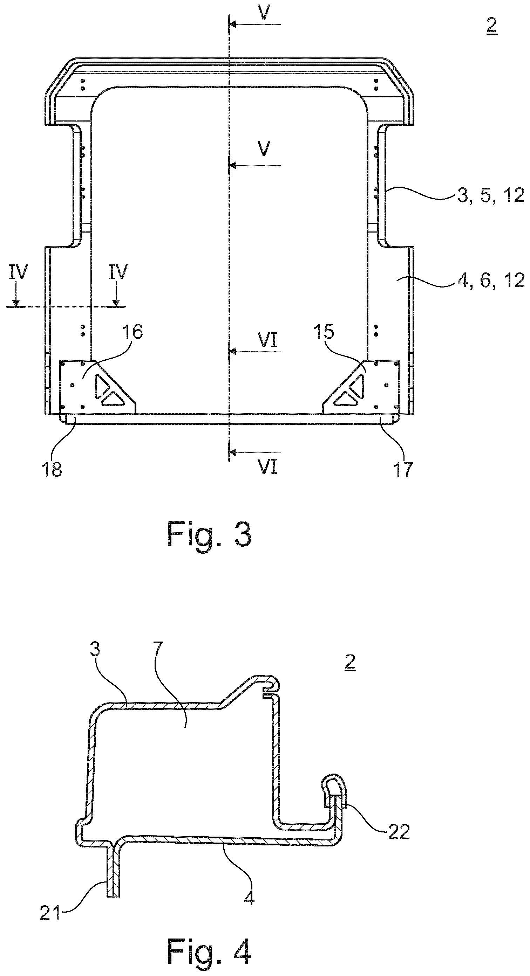

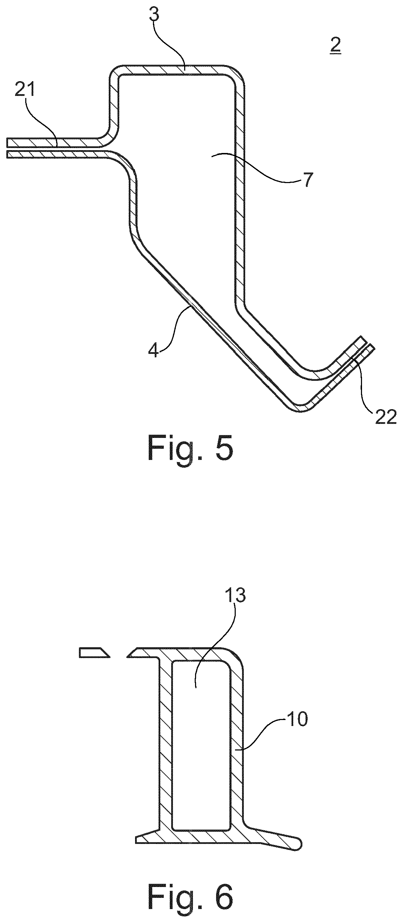

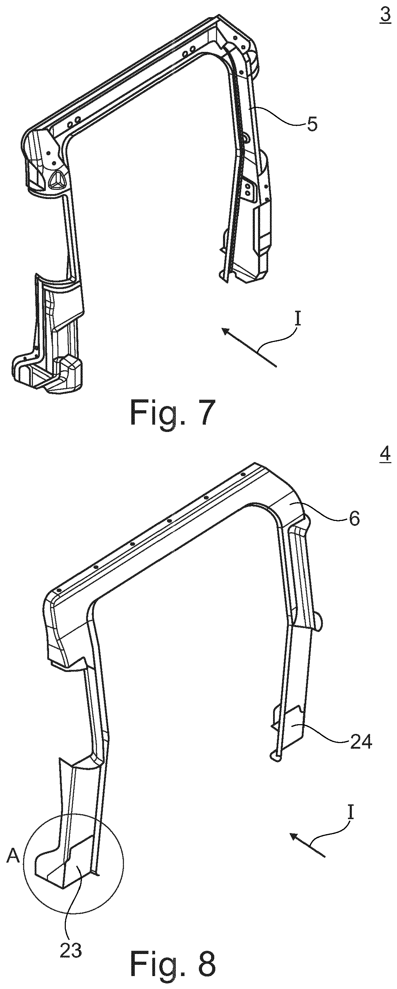

Fig. 1 bis 8 zeigen ein Freizeitfahrzeug 1 mit einem Heckrahmen 2 entsprechend einem Ausführungsbeispiel. Hierbei zeigt Fig. 1 das Freizeitfahrzeug 1 in einer räumlichen Darstellung. Fig. 2 zeigt den Heckrahmen 2 des Freizeitfahrzeugs 1, der ein Außenteil 3 und ein Innenteil 4 umfasst. Das Außenteil 3 basiert auf einer U-förmigen Grundform 5, wie es auch in Fig. 7 gezeigt ist. Das Innenteil 4 basiert auf einer U-förmigen Grundform 6, wie es auch in Fig. 8 gezeigt ist. Das Außenteil 3 und das Innenteil 4 sind miteinander verbunden. Hierdurch ist ein Hohlraum 7 gebildet, wie es auch in Fig. 4 und 5 gezeigt ist. Der Hohlraum 7 kann hierbei auch abschnittsweise unterteilt sein.

Fig. 2 zeigt das Außenteil 3 und das Innenteil 4 sowie ein Bodenprofil 10. Im montierten Zustand ist das Bodenprofil 10 an einem Boden 11 (Fig. 1) des Freizeitfahrzeugs 1 angeordnet. Beispielsweise kann das Bodenprofil 10 in einen als Laufboden 11 ausgebildeten Boden 11 integriert sein. Die U-förmigen Grundformen 5, 6 sind im montierten Zustand am Boden 11 geöffnet. Dort ist das Bodenprofil 10 vorgesehen, so dass eine O-förmig geschlossene Versteifungsanordnung 12 gebildet ist. Das Bodenprofil 10 ist als Hohlprofil ausgestaltet, wie es auch in Fig. 6 gezeigt ist.

Der Heckrahmen 2 weist in diesem Ausführungsbeispiel außerdem als Versteifungswinkel 15, 16 ausgebildete Versteifungselemente 15, 16 auf, die an den Enden 17, 18 des Bodenprofils 10 mit dem Außenteil 3 und/oder dem Innenteil 4 sowie dem Bodenprofil 10 verbunden sind.

Fig. 3 zeigt den Heckrahmen 2 mit dem Außenteil 3 und dem Innenteil 4, wobei im Unterschied zur Fig. 2 eine Ansicht auf das Innenteil 4 gezeigt ist. In diesem Ausführungsbeispiel sind die Versteifungselemente 15, 16 mit dem Innenteil 4 verbunden.

Fig. 4 zeigt das Außenteil 3 des Heckrahmens 2 in einer räumlichen Darstellung, wobei die mit I bezeichnete Richtung entsprechend der in Fig. 1 gezeigten Richtung I gewählt ist. In diesem Ausführungsbeispiel ist das Außenteil 3 als Außenschale 3 ausgestaltet. Die Außenschale 3 ist aus einem glasfaserverstärkten Kunststoff ausgebildet. Bei einer abgewandelten Ausgestaltung können beispielsweise Metallelemente, insbesondere Metallblechteile oder ein Blechteil einlaminiert sein.

Fig. 4 zeigt den in Fig. 4 mit IV bezeichneten Ausschnitt des Heckrahmens 2. Hierbei sind zwischen dem Außenteil 3 und dem Innenteil 4 Verbindungsflächen 21, 22 ausgestaltet, an denen eine Klebeverbindung zwischen dem Außenteil 3 und dem Innenteil 4 realisiert ist.

Fig. 5 zeigt einen Schnitt durch den in Fig. 3 gezeigten Heckrahmen entlang der mit V bezeichneten Schnittlinie. Hierbei ist ebenfalls eine Klebeverbindung an den Verbindungsflächen 21, 22 realisiert.

Wie in den Fig. 4 und 5 gezeigt ist, ist zwischen dem Außenteil 2 und dem Innenteil 4 der Hohlraum 7 gebildet.

Fig. 6 zeigt das Bodenprofil 10 in einer auszugsweisen, schematischen Schnittdarstellung. Das Bodenprofil 10 ist als Hohlprofil mit einem Hohlraum 13 ausgestaltet.

Fig. 7 zeigt das Außenteil 3 des in Fig. 2 gezeigten Heckrahmens 2, wobei eine Ansicht von schräg hinten dargestellt ist. Das Außenteil 3 ist in diesem Ausführungsbeispiel als Außenschale ausgestaltet, die aus einem glasfaserverstärkten Kunststoff ausgebildet ist. Hierbei können Blechelemente einlaminiert sein.

Fig. 8 zeigt das Innenteil 4 des Heckrahmens 2 in einer räumlichen, schematischen Darstellung, wobei die mit I bezeichnete Richtung der Richtung I in Fig. 1 entspricht. Das Innenteil 4 ist als Innenschale ausgestaltet. Die Innenschale ist aus einem glasfaserverstärkten Kunststoff ausgebildet, wobei Blechelemente einlaminiert sein können. In diesem Ausführungsbeispiel sind Blechteile 23, 24 vorgesehen, die im montierten Zustand im Bereich eines Bodens 11 des Freizeitfahrzeugs 1 angeordnet sind. Die Blechteile 23, 24 gewährleisten dadurch insbesondere ein hohe mechanische Festigkeit gegenüber Ausreißen oder dergleichen, um beispielsweise eine Schraubverbindung am Boden 11 des Freizeitfahrzeugs 1 zu realisieren. Die Blechteile 23, 24 gewährleisten auch eine weitere Stabilisierung zusammen mit dem Bodenprofil 10. Die Blechteile 23, 24 können somit in vorteilhafter Weise als Bodenblechteile 23, 24 dienen.

Die Erfindung ist nicht auf die beschriebenen Ausführungsformen beschränkt.

## Patentansprüche

1. Heckrahmen (2) für ein Freizeitfahrzeug (1), insbesondere ein Wohnmobil, mit einem Außenteil (3) und einem Innenteil (4), wobei das Außenteil (3) auf einer U-förmigen Grundform (5) basiert, wobei das Innenteil (4) auf einer U-förmigen Grundform (6) basiert und wobei das Außenteil (3) und das Innenteil (4) so miteinander verbunden sind, dass entlang der U-förmigen Grundformen (5, 6) zumindest abschnittsweise ein von dem Außenteil (3) und dem Innenteil (4) begrenzter Hohlraum (7) gebildet ist.

2. Heckrahmen nach Anspruch 1,
**dadurch gekennzeichnet,**
**dass** zumindest ein Bodenprofil (10) vorgesehen ist, dass das Außenteil (3) auf einer im montierten Zustand am Boden (11) des Freizeitfahrzeug (1) offenen U-förmigen Grundform (5) basiert, dass das Innenteil (6) auf einer im montierten Zustand auf einer im Boden (11) des Freizeitfahrzeugs (1) offenen U-förmigen Grundform (6) basiert und dass das Außenteil (3) und/oder das Innenteil (4) am Boden (11) so mit dem Bodenprofil (10) verbunden sind, dass eine O-förmig geschlossene Versteifungsanordnung (12) gebildet ist.

3. Heckrahmen nach Anspruch 2,
**dadurch gekennzeichnet,**
**dass** das Bodenprofil (10) zumindest im Wesentlichen als Hohlprofil ausgestaltet ist.

4. Heckrahmen nach Anspruch 2 oder 3,
**dadurch gekennzeichnet,**
**dass** Versteifungselemente (15, 16), insbesondere Versteifungswinkel (15, 16), vorgesehen sind, die an den Enden (17, 18) des Bodenprofils (10) mit dem Außenteil (3) und/oder dem Innenteil (4) verbunden sind.

5. Heckrahmen nach einem der Ansprüche 1 bis 4,
**dadurch gekennzeichnet,**
**dass** das Außenteil (3) zumindest teilweise, insbesondere zumindest im Wesentlichen, aus einem faserverstärkten Kunststoff, insbesondere einem glasfaserverstärkten Kunststoff, ausgebildet ist und/oder dass das Innenteil (4) zumindest teilweise, insbesondere zumindest im Wesentlichen, aus einem faserverstärkten Kunststoff, insbesondere einem glasfaserverstärkten Kunststoff, ausgebildet ist.

6. Heckrahmen nach einem der Ansprüche 1 bis 5,
**dadurch gekennzeichnet,**
**dass** das Außenteil (3) und das Innenteil (4) miteinander zumindest durch Kleben verbunden sind.

7. Heckrahmen nach Anspruch 6,
**dadurch gekennzeichnet,**
**dass** das Außenteil (3) und das Innenteil (4) so ausgestaltet sind, dass entlang der U-förmigen Grundformen (5, 6) zumindest abschnittsweise Verbindungsflächen (21, 22) ausgestaltet sind, an denen das Außenteil (3) und das Innenteil (4) durch Kleben miteinander verbunden sind.

8. Heckrahmen nach einem der Ansprüche 1 bis 7,
**dadurch gekennzeichnet,**
**dass** das Außenteil (3) und/oder das Innenteil (4) zumindest ein Blechteil (23, 24), insbesondere ein Bodenblechteil (23, 24), aufweisen, das vorzugsweise überlaminiert ist.

9. Heckrahmen nach Anspruch 8,
**dadurch gekennzeichnet,**
**dass** das Außenteil (3) und/oder das Innenteil (4) an dem Blechteil (23, 24) im montierten Zustand mit einem Boden (11) des Freizeitfahrzeugs (1) verbunden ist.

10. Freizeitfahrzeug (1), insbesondere Wohnmobil, mit einem Heckrahmen (2) nach einem der Ansprüche 1 bis 9.

## Claims

1. Rear frame (2) for a recreational vehicle (1), in particular a motorhome, with an outer part (3) and an inner part (4), wherein the outer part (3) is based on a U-shaped basic form (5), wherein the inner part (4) is based on a U-shaped basic form (6) and wherein the outer part (3) and the inner part (4) are connected to each other in such a way that a cavity (7) bounded by the outer part (3) and the inner part (4) is formed at least in sections along the U-shaped basic forms (5, 6).

2. Rear frame according to claim 1,
**characterised in that**
at least one floor profile (10) is provided, that the outer part (3) is based on a U-shaped basic form (5) which is open at the floor (11) of the recreational vehicle (1) when assembled, that the inner part (6) is based on a U-shaped basic form (6) which is open at the floor (11) of the recreational vehicle (1) when assembled, and that the outer part (3) and/or the inner part (4) are connected to the floor profile (10) at the floor (11) in such a way that an O-shaped closed stiffening arrangement (12) is formed.

3. Rear frame according to claim 2,
**characterised in that**
the floor profile (10) is designed at least substantially as a hollow profile.

4. Rear frame according to claim 2 or 3,
**characterised in that**
stiffening elements (15, 16), in particular stiffening angles (15, 16), are provided which are connected to the outer part (3) and/or the inner part (4) at the ends (17, 18) of the floor profile (10).

5. Rear frame according to any one of claims 1 to 4,
**characterised in that**
the outer part (3) is at least partially, in particular at least substantially, made of a fibre-reinforced plastic, in particular a glass fibre-reinforced plastic, and/or that the inner part (4) is at least partially, in particular at least substantially, made of a fibre-reinforced plastic, in particular a glass fibre-reinforced plastic.

6. Rear frame according to any one of claims 1 to 5,
**characterised in that**
the outer part (3) and the inner part (4) are connected to each other at least by adhesive bonding.

7. Rear frame according to claim 6,
**characterised in that**
the outer part (3) and the inner part (4) are designed such that connection surfaces (21, 22) are designed at least in sections along the U-shaped basic forms (5, 6), at which the outer part (3) and the inner part (4) are connected to each other by adhesive bonding.

8. Rear frame according to any one of claims 1 to 7,
**characterised in that**
the outer part (3) and/or the inner part (4) have at least one sheet metal part (23, 24), in particular a floor sheet metal part (23, 24), which is preferably laminated over.

9. Rear frame according to claim 8,
**characterised in that**
the outer part (3) and/or the inner part (4) is connected to the sheet metal part (23, 24) in the assembled state with a floor (11) of the recreational vehicle (1).

10. Recreational vehicle (1), in particular a motorhome, with a rear frame (2) according to any one of claims 1 to 9.

## Revendications

1. Cadre arrière (2) destiné à un véhicule de loisirs (1), en particulier un camping-car, comprenant une partie extérieure (3) et une partie intérieure (4), dans lequel la partie extérieure (3) repose sur une forme de base en U (5), dans lequel la partie intérieure (4) repose sur une forme de base en U (6), et dans lequel la partie extérieure (3) et la partie intérieure (4) sont reliées l'une à l'autre de manière à former, au moins localement, une cavité limitée (7) par la partie extérieure (3) et la partie intérieure (4) le long des formes de base en U (5, 6).

2. Cadre arrière selon la revendication 1,
**caractérisé en ce que**
il est prévu au moins un profilé de plancher (10), la partie extérieure (3) repose sur une forme de base en U (5) ouverte dans l'état monté sur le plancher (11) du véhicule de loisirs (1), la partie intérieure (6) repose sur une forme de base en U (6) ouverte dans l'état monté sur le plancher (11) du véhicule de loisirs (1), et la partie extérieure (3) et/ou la partie intérieure (4) sont reliées, au niveau du plancher (11), au profilé de plancher (10) de manière à former un agencement de renforcement fermé en O (12).

3. Cadre arrière selon la revendication 2,
**caractérisé en ce que**
le profilé de plancher (10) au moins sensiblement est conçue en tant que profilé creux.

4. Cadre arrière selon la revendication 2 ou 3,
**caractérisé en ce que**
il est prévu des éléments de renforcement (15, 16), en particulier des angles de renforcement (15, 16), qui sont reliés à la partie extérieure (3) et/ou à la partie intérieure (4) au niveau des extrémités (17, 18) du profilé de plancher (10).

5. Cadre arrière selon l'une des revendications 1 à 4,
**caractérisé en ce que**
la partie extérieure (3) est réalisée au moins en partie, en particulier au moins sensiblement, à partir d'une matière plastique renforcée par fibres, en particulier une matière plastique renforcée par fibres de verre, et/ou **en ce que** la partie intérieure (4) est réalisée au moins en partie, en particulier au moins sensiblement, à partir d'une matière plastique renforcée par fibres, en particulier une matière plastique renforcée par fibres de verre.

6. Cadre arrière selon l'une des revendications 1 à 5,
**caractérisé en ce que**
la partie extérieure (3) et la partie intérieure (4) sont reliées l'une à l'autre au moins au moyen d'adhésifs.

7. Cadre arrière selon la revendication 6,
**caractérisé en ce que**
la partie extérieure (3) et la partie intérieure (4) sont conçu de manière à ce que, le long des formes de base en U (5, 6), des surfaces de liaison (21, 22) sont conçues au moins localement, au niveau desquelles la partie extérieure (3) et la partie intérieure (4) sont reliées l'une à l'autre au moyen d'adhésifs.

8. Cadre arrière selon l'une des revendications 1 à 7,
**caractérisé en ce que**
la partie extérieure (3) et/ou la partie intérieure (4) présentent au moins une partie en tôle (23, 24), en particulier une partie en tôle de plancher (23, 24), qui est de préférence surstratifiée.

9. Cadre arrière selon la revendication 8,
**caractérisé en ce que**
la partie extérieure (3) et/ou la partie intérieure (4) sont reliées dans l'état monté à un plancher (11) du véhicule de loisirs (1).

10. Véhicule de loisirs (1), en particulier camping-car, comprenant un cadre arrière (2) selon l'une des revendications 1 à 9.
